# EUROPEAN PATENT APPLICATION

(11) **EP 1 585 007 A1**
(43) Date of publication of application: **12.10.2005**
(21) Application number: 05006772.7
(22) Date of filing: 29.03.2005
(51) Int. Cl.: G06F 1/00, G11C 29/00

(54) **Method and system for secure erasure of information in non-volatile memory in an electronic device**

(30) Priority: 07.04.2004 US 819735
(71) Applicant: Broadcom Corporation, California 92618-7013 (US)
(72) Inventor: Khare, Rajendra, 75 Bangalore (IN); Relan, Sandeep, 560037 Bangalore (IN); Mishra, Brajabandhu, 93 Bangalore (IN)
(74) Representative: Jehle, Volker Armin

(57) **Abstract**

Disclosed herein is a method and system for erasing at least a portion of non-volatile memory in an electronic device, such as for example, a mobile handset. The erase command may be received at a processor of the electronic device from an electronic device server via a wireless or a wired communication network. In an embodiment according to the present invention, the electronic device may also prompt an end-user to erase at least a portion of the non-volatile memory. Secure erasure of non-volatile memory may include overwriting at least one selected portion of memory with predetermined data/information and/or randomly generated data/information. In an embodiment according to the present invention, a secure erasure of at least one portion of non-volatile memory may include overwriting one of a plurality of times and at least once the selected portion of non-volatile memory to be erased.

## Description

### RELATED APPLICATIONS

[Not Applicable]

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

Electronic devices, such as mobile phones and personal digital assistants (PDA's), and the like, contain a finite amount memory for storing placed call information, received call information, a telephone number directory or contact list, for storing software/firmware usable to access services that an end-user may subscribe, buffering information associated with the subscribed services, and for storing data to be output (test or image).

The subscribed services may include such features as wireless web browsing, wireless games, text message service, short message service, paging service, stock ticker service, sports ticker service, etc. Using the subscribed services recited above may fill the memory with a plurality of information related to the associated services. However, filling the memory with the plurality of information related to the associated services may result in slowing the electronic device's ability to process calls, and may significantly reduce the electronic device's ability to perform and process calls and the subscribed services. Additionally, filling the memory with the plurality of information may also reduce the electronic device's capacity for storing additional information. Additionally, the information stored in the memory such as the PIN number keyed in during phone banking transactions, can be confidential to a certain user or to a certain group of users.

Erasing information from an electronic device may be important to ensure and maintain the privacy of the electronic device's end-user. Current electronic devices are limited in the ability to securely erase information stored therein. Current electronic device are not capable of erasing, for example, information stored in a redial function for a mobile handset. Additionally, deleting or erasing information in current electronic devices does not necessarily mean that the information is not retrievable from memory in the electronic device.

For example, issuing a command to erase or delete a section of memory in current electronic devices ordinarily merely means that the memory locations deemed deleted or erased are only identified in memory being available for overwriting or identified as being inactive or not in use. The information stored in the memory locations are not, however, actively erased or deleted in current electronic devices.

Further, in the preset electronic devices like phones, cell phones, etc., the data keyed may be displayed and can also be redisplayed by pressing redial button. This may lead to a situation where confidential information like the PIN can be viewed by an unauthorized viewer.

Further limitations and disadvantages of conventional and traditional approaches will become apparent to one of skill in the art, through comparison of such systems with some aspects of the present invention as set forth in the remainder of the present application with reference to the drawings appended hereto.

### SUMMARY OF THE INVENTION

Aspects of the present invention may be found in a method of erasing at least one portion of non-volatile memory in an electronic device. The method may comprise receiving an erase command, evaluating the erase command to determine the at least one portion of the non-volatile memory to be erased, and performing an erase process upon the at least one portion of non-volatile memory. Performing the erase process may comprise overwriting memory locations of the at least one portion of non-volatile memory with predetermined data.

In an embodiment according to the present invention, the method may further comprise generating the predetermined data prior to performing the erase process, storing the predetermined data in a non-volatile storage unit, and retrieving the predetermined data from the non-volatile storage unit.

In an embodiment according to the present invention, the method may further comprise overwriting memory locations of the at least one portion of non-volatile memory with predetermined data one of a plurality of times and at least once.

In an embodiment according to the present invention, performing the erase process may comprise overwriting memory locations of the at least one portion of non-volatile memory with randomly generated data.

In an embodiment according to the present invention, the method may further comprise generating the randomly generated data prior to performing the erase process, storing the randomly generated data in a non-volatile storage unit, and retrieving the randomly generated data from the non-volatile storage unit.

In an embodiment according to the present invention, the method may further comprise generating the randomly generated data simultaneously while performing the erase process, and overwriting the memory locations of the at least one portion of the non-volatile memory with the randomly generated data as the randomly generated data is generated.

In an embodiment according to the present invention, the method may further comprise overwriting memory locations of the at least one portion of non-volatile memory with randomly generated data one of a plurality of times and at least once ensuring secure erasing of the at least one portion of non-volatile memory.

In an embodiment according to the present invention, performing the erase process may comprise one of a) overwriting memory locations of the at least one portion of non-volatile memory a first time with predetermined data and overwriting the memory locations of the at least one portion of non-volatile memory a second time with randomly generated data and b) overwriting the memory locations of the at least one portion of non-volatile memory the first time with randomly generated data, and overwriting memory locations of the at least one portion of non-volatile memory the second time with predetermined data.

In an embodiment according to the present invention, receiving the erase command may comprise receiving the erase command via one of a wireless and a wired communication network from an electronic device server.

In an embodiment according to the present invention, receiving the erase command via one of a wireless and a wired communication network from an electronic device server may enable and invoke the electronic device to prompt an end-user to initiate the erase process.

In an embodiment according to the present invention, receiving the erase command may comprise receiving the erase command from an end-user via an end-user selection from a menu of maintenance operations.

In an embodiment according to the present invention, the method may further comprise upon successful completion of the erase process, sending a message to at least one of a display of the electronic device and to an electronic device server via one of a wireless and a wired communications network. The message may indicate that the at least one portion of the non-volatile memory was erased.

In an embodiment according to the present invention, the method may further comprise upon failure of the erase process, sending a message to at least one of a display of the electronic device and to an electronic device server via one of a wireless and wired communications network. The message may indicate that at least part of non-volatile memory to be erased remains un-erased. The message may also comprise a request to re-initiate the erase process.

In an embodiment according to the present invention, the electronic device may comprise a mobile electronic device having at least one of software and firmware. The electronic device may comprise at least one of a mobile cellular phone handset, a personal digital assistant, a pager, a multimedia device, a camera, and other electronic end-user devices.

In an embodiment according to the present invention, the method may further comprise one of completely erasing data and deleting the data by allowing the data to be overwritten in memory without erasing the data.

Aspects of the present invention may be found in an electronic device having non-volatile memory. The electronic device may be adapted to erase at least one portion of non-volatile memory. The electronic device may comprise a processor adapted to manage an erase process, a non-volatile storage unit containing one of predetermined data and randomly generated data, random access memory facilitating temporary storage of erase process parameters during the erase process, and a pseudo-random number generator (PRNG) for randomly generating data usable during the erase process. Upon receiving an erase command, the electronic device may be adapted to erase the at least one portion of non-volatile memory.

In an embodiment according to the present invention, the processor may be adapted to evaluate the erase command to determine the at least one portion of the non-volatile memory to be erased.

In an embodiment according to the present invention, the processor may be adapted to overwrite memory locations of the at least one portion of non-volatile memory with predetermined data during an erase process.

In an embodiment according to the present invention, the PRNG may be adapted to generate the predetermined data prior to the processor performing the erase process.

In an embodiment according to the present invention, the predetermined data may be stored in the non-volatile storage unit.

In an embodiment according to the present invention, the processor may be adapted to retrieve the predetermined data from the non-volatile storage unit during the erase process.

In an embodiment according to the present invention, the processor may be adapted to overwrite memory locations of the at least one portion of non-volatile memory with the predetermined data one of a plurality of times and at least once ensuring secure erasure of the at least one portion of non-volatile memory.

In an embodiment according to the present invention, the processor may be adapted to overwrite memory locations of the at least one portion of non-volatile memory with randomly generated data during the erase process.

In an embodiment according to the present invention, the PRNG may be adapted to generate randomly generate data simultaneously in connection with the processor performing the erase process. The randomly generated data may be for use in overwriting memory locations in the at least one portion of non-volatile memory being erased.

In an embodiment according to the present invention, the processor may be adapted to overwrite memory locations of the at least one portion of the non-volatile memory with randomly generated data as the randomly generated data is generated by the PRNG.

In an embodiment according to the present invention, the processor may be adapted to overwrite memory locations of the at least one portion of non-volatile memory with randomly generated data one of a plurality of time and at least once ensuring secure erasure of the at least one portion of non-volatile memory during the erase process.

In an embodiment according to the present invention, the processor may be adapted to perform the erase process by initially overwriting memory locations of the at least one portion of non-volatile memory with predetermined data and then overwriting the memory locations of the at least one portion of non-volatile memory with randomly generated data to ensure secure erasure of the at least one portion of non-volatile memory being erased.

In an embodiment according to the present invention, the processor may be adapted to perform the erase process by initially overwriting the memory locations of the at least one portion of non-volatile memory with randomly generated data and then overwriting the memory locations of the at least one portion of non-volatile memory with predetermined data to ensure secure erasure of the at least one portion of non-volatile memory being erased.

In an embodiment according to the present invention, the electronic device may be adapted to receive the erase command via one of a wireless and a wired communication network from an electronic device server.

In an embodiment according to the present invention, the electronic device may be adapted to prompt an end-user to initiate the erase process.

In an embodiment according to the present invention, the electronic device may be provided with a plurality of menus having selections for an end-user to select for initiating the erase process.

In an embodiment according to the present invention, the electronic device may further comprise a message storage unit, wherein upon successful completion of the erase process, the processor may be adapted to send a message from the message storage unit to at least one of a display of the electronic device and to an electronic device server via one of a wireless and wired communications network, wherein the message may indicate that the at least one portion of the non-volatile memory was erased.

In an embodiment according to the present invention, the electronic device may further comprise a message storage unit, wherein, upon failure of the erase process, the processor may be adapted to send a message from the message storage unit to at least one of a display of the electronic device and to an electronic device server via one of a wireless and a wired communications network, the message may indicate that at least a part of the non-volatile memory to be erased remains un-erased, and wherein the message may also comprise a request to re-initiate the erase process.

In an embodiment according to the present invention, the electronic device may comprise a mobile electronic device having at least one of software and firmware, wherein the electronic device may comprise at least one of a mobile cellular phone handset, a personal digital assistant, a pager, a multimedia device, a camera, and other electronic end-user devices.

In an embodiment according to the present invention, the electronic device may provide options for a user to choose during an erase process, wherein the options may comprise one of a secure erase process and an un-secure erase process.

In an embodiment according to the present invention, a secure erase process may comprise completely erasing at least a portion of non-volatile memory by overwriting the at least one portion of non-volatile memory one of a plurality of times and at least once.

In an embodiment according to the present invention, an un-secure erase process may comprise designating at least one portion of non-volatile memory as deleted without initiating a corresponding erase and overwrite process on the at least one portion of non-volatile memory. The un-secure erase process may further comprise permitting the at least one portion of non-volatile memory to be overwritten on a basis of when the at least one portion of non-volatile is used by the electronic device without initiating an overwriting procedure at a time when the at least one portion of non-volatile memory is designated as deleted.

In an embodiment according to the present invention, if a user selects the secure erase process and a complete erasing of the at least one portion of non-volatile memory, an overwriting procedure may immediately be initiated upon the at least one portion of non-volatile memory to be erased.

In an embodiment according to the present invention, if the user selects the un-secure erase process, then the at least one portion of non-volatile memory may be made available for overwriting without actually initiating overwriting and erasing of the at least one portion of non-volatile memory, wherein the at least one portion of non-volatile memory is designated as deleted.

In an embodiment according to the present invention, the electronic device may be adapted to prompt a user to perform a secured data keying option.

In an embodiment according to the present invention, if the user selects the secured data keying option, then data keyed by the user may not displayed.

In an embodiment according to the present invention, if the user selects the secured data keying option, then data keyed by the user may be displayed with predetermined characters, wherein the predetermined characters may be at least one of numbers, alphabet letters, symbols, and spaces.

In an embodiment according to the present invention, along with predetermined characters displayed, audible signals may also be generated and played by the electronic device during a secure data keying process.

In an embodiment according to the present invention, the audible signals may be predetermined and correspond to securely keyed data characters.

In an embodiment according to the present invention, if the user selects the secured data keying option, then data keyed by the user may be overwritten and completely erased from memory.
According to an aspect of the invention, a method of erasing at least one portion of non-volatile memory in an electronic device is provided, the method comprising:
receiving an erase command;
evaluating the erase command to determine the at least one portion of the non-volatile memory to be erased; and
performing an erase process upon the at least one portion of non-volatile memory, wherein performing the erase process comprises overwriting memory locations of the at least one portion of non-volatile memory with predetermined data.
Advantageously, the method further comprises:
generating the predetermined data prior to performing the erase process;
storing the predetermined data in a non-volatile storage unit; and
retrieving the predetermined data from the non-volatile storage unit.
Advantageously, the method further comprises overwriting memory locations of the at least one portion of non-volatile memory with predetermined data one of a plurality of times and at least once.
Advantageously, performing the erase process comprises overwriting memory locations of the at least one portion of non-volatile memory with randomly generated data.
Advantageously, the method further comprises:
generating the randomly generated data prior to performing the erase process;
storing the randomly generated data in a non-volatile storage unit; and
retrieving the randomly generated data from the non-volatile storage unit.
Advantageously, the method further comprises:
generating the randomly generated data simultaneously while performing the erase process; and
overwriting the memory locations of the at least one portion of the non-volatile memory with the randomly generated data as the randomly generated data is generated.
Advantageously, the method further comprises overwriting memory locations of the at least one portion of non-volatile memory with randomly generated data one of a plurality of times and at least once ensuring secure erasing of the at least one portion of non-volatile memory.
Advantageously, performing the erase process comprises one of:
a) overwriting memory locations of the at least one portion of non-volatile memory a first time with predetermined data and overwriting the memory locations of the at least one portion of non-volatile memory a second time with randomly generated data; and
b) overwriting the memory locations of the at least one portion of non-volatile memory the first time with randomly generated data, and overwriting memory locations of the at least one portion of non-volatile memory the second time with predetermined data.
Advantageously, receiving the erase command comprises receiving the erase command via one of a wireless and a wired communication network from an electronic device server.
Advantageously, receiving the erase command via one of a wireless and a wired communication network from an electronic device server enables and invokes the electronic device to prompt an end-user to initiate the erase process.
Advantageously, receiving the erase command comprises receiving the erase command from an end-user via an end-user selection from a menu of maintenance operations.
Advantageously, the method further comprises upon successful completion of the erase process, sending a message to at least one of a display of the electronic device and to an electronic device server via one of a wireless and a wired communications network, wherein the message indicating that the at least one portion of the non-volatile memory was erased.
Advantageously, the method further comprises, upon failure of the erase process, sending a message to at least one of a display of the electronic device and to an electronic device server via one of a wireless and wired communications network, the message indicating that at least part of non-volatile memory to be erased remains un-erased, and the message also comprising a request to re-initiate the erase process.
Advantageously, the electronic device comprises a mobile electronic device having at least one of software and firmware, wherein the electronic device comprises at least one of a mobile cellular phone handset, a personal digital assistant, a pager, a multimedia device, a camera, and other electronic end-user devices.
Advantageously, the method further comprises one of completely erasing data and deleting the data by allowing the data to be overwritten in memory without erasing the data.
According to an aspect of the invention, an electronic device having non-volatile memory is provided, the electronic device being adapted to erase at least one portion of non-volatile memory, the electronic device comprising:
a processor adapted to manage an erase process;
a non-volatile storage unit containing one of predetermined data and randomly generated data;
random access memory facilitating temporary storage of erase process parameters during the erase process; and
a pseudo-random number generator (PRNG) for randomly generating data usable during the erase process, wherein upon receiving an erase command, the electronic device is adapted to erase the at least one portion of non-volatile memory.
Advantageously, the processor is adapted to evaluate the erase command to determine the at least one portion of the non-volatile memory to be erased.
Advantageously, the processor is adapted to overwrite memory locations of the at least one portion of non-volatile memory with predetermined data during an erase process.
Advantageously, the PRNG is adapted to generate the predetermined data prior to the processor performing the erase process.
Advantageously, the predetermined data is stored in the non-volatile storage unit.
Advantageously, the processor is adapted to retrieve the predetermined data from the non-volatile storage unit during the erase process.
Advantageously, the processor is adapted to overwrite memory locations of the at least one portion of non-volatile memory with the predetermined data one of a plurality of times and at least once ensuring secure erasure of the at least one portion of non-volatile memory.
Advantageously, the processor is adapted to overwrite memory locations of the at least one portion of non-volatile memory with randomly generated data during the erase process.
Advantageously, the PRNG is adapted to generate randomly generate data simultaneously in connection with the processor performing the erase process, the randomly generated data for use in overwriting memory locations in the at least one portion of non-volatile memory being erased.
Advantageously, the processor is adapted to overwrite memory locations of the at least one portion of the non-volatile memory with randomly generated data as the randomly generated data is generated by the PRNG.
Advantageously, the processor is adapted to overwrite memory locations of the at least one portion of non-volatile memory with randomly generated data one of a plurality of time and at least once ensuring secure erasure of the at least one portion of non-volatile memory during the erase process.
Advantageously, the processor is adapted to perform the erase process by initially overwriting memory locations of the at least one portion of non-volatile memory with predetermined data and then overwriting the memory locations of the at least one portion of non-volatile memory with randomly generated data to ensure secure erasure of the at least one portion of non-volatile memory being erased.
Advantageously, the processor is adapted to perform the erase process by initially overwriting the memory locations of the at least one portion of non-volatile memory with randomly generated data and then overwriting the memory locations of the at least one portion of non-volatile memory with predetermined data to ensure secure erasure of the at least one portion of non-volatile memory being erased.
Advantageously, the electronic device is adapted to receive the erase command via one of a wireless and a wired communication network from an electronic device server.
Advantageously, the electronic device is adapted to prompt an end-user to initiate the erase process.
Advantageously, the electronic device is provided with a plurality of menus having selections for an end-user to select for initiating the erase process.
Advantageously, the device further comprises a message storage unit, wherein upon successful completion of the erase process, the processor is adapted to send a message from the message storage unit to at least one of a display of the electronic device and to an electronic device server via one of a wireless and wired communications network, wherein the message indicating that the at least one portion of the non-volatile memory was erased.
Advantageously, the device further comprises a message storage unit, wherein, upon failure of the erase process, the processor is adapted to send a message from the message storage unit to at least one of a display of the electronic device and to an electronic device server via one of a wireless and a wired communications network, the message indicating that at least a part of the non-volatile memory to be erased remains un-erased, and wherein the message also comprising a request to re-initiate the erase process.
Advantageously, the device further comprises a mobile electronic device having at least one of software and firmware, wherein the electronic device comprises at least one of a mobile cellular phone handset, a personal digital assistant, a pager, a multimedia device, a camera, and other electronic end-user devices.
Advantageously, the electronic device provides options for a user to choose during an erase process, wherein the options comprise one of a secure erase process and an un-secure erase process.
Advantageously, a secure erase process comprises completely erasing at least a portion of non-volatile memory by overwriting the at least one portion of non-volatile memory one of a plurality of times and at least once.
Advantageously, an un-secure erase process comprises:
designating at least one portion of non-volatile memory as deleted without initiating a corresponding erase and overwrite process on the at least one portion of non-volatile memory, wherein the un-secure erase process further comprising:
   permitting the at least one portion of non-volatile memory to be overwritten on a basis of when the at least one portion of non-volatile is used by the electronic device without initiating an overwriting procedure at a time when the at least one portion of non-volatile memory is designated as deleted.
Advantageously, if a user selects the secure erase process and a complete erasing of the at least one portion of non-volatile memory, an overwriting procedure is immediately initiated upon the at least one portion of non-volatile memory to be erased.
Advantageously, if the user selects the un-secure erase process, then the at least one portion of non-volatile memory is made available for overwriting without actually initiating overwriting and erasing of the at least one portion of non-volatile memory, wherein the at least one portion of non-volatile memory is designated as deleted.
Advantageously, the electronic device is adapted to prompt a user to perform a secured data keying option.
Advantageously, if the user selects the secured data keying option, then data keyed by the user is not displayed.
Advantageously, if the user selects the secured data keying option, then data keyed by the user is displayed with predetermined characters, wherein the predetermined characters may be at least one of numbers, alphabet letters, symbols, and spaces.
Advantageously, along with predetermined characters displayed, audible signals are also generated and played by the electronic device during a secure data keying process.
Advantageously, the audible signals are predetermined and correspond to securely keyed data characters.
Advantageously, if the user selects the secured data keying option, then data keyed by the user is overwritten and completely erased from memory.

These and other features and advantages of the present invention may be appreciated from a review of the following detailed description of the present invention, along with the accompanying figures in which like reference numerals refer to like parts throughout.

### BRIEF DESCRIPTION OF SEVERAL VIEWS OF THE DRAWINGS

**Figure 1** is a perspective diagram illustrating an electronic device in accordance with an embodiment of the present invention;

**Figure 1A** is a block diagram illustrating components of an electronic device in accordance with an embodiment of the present invention;

**Figure 1B** is a block diagram illustrating an electronic device network in accordance with an embodiment of the present invention;

**Figure 2** is a block diagram illustrating an electronic device controller in accordance with an embodiment of the present invention;

**Figure 3** is a block diagram illustrating a memory configuration in an electronic device in accordance with an embodiment of the present invention;

**Figure 4** is a block diagram illustrating a memory configuration and an additional storage unit in an electronic device in accordance with an embodiment of the present invention;

**Figure 5** is a block diagram illustrating a memory configuration and an additional storage unit in an electronic device in accordance with an embodiment of the present invention; and

**Figure 6** is a block diagram illustrating a memory configuration and a random number generator in an electronic device in accordance with an embodiment of the present invention;

**Figure 7** is a flow chart illustrating a method of erasing a memory configuration in an electronic device in accordance with an embodiment of the present invention;

**Figure 8** is a flow chart illustrating another method of erasing a memory configuration in an electronic device in accordance with an embodiment of the present invention;

**Figure 9** is a flow chart illustrating a method of securely erasing a memory configuration in an electronic device in accordance with an embodiment of the present invention; and

**Figure 10** is a flow chart illustrating another method of securely erasing a memory configuration in an electronic device in accordance with an embodiment of the present invention.

### DETAILED DESCRIPTION OF THE INVENTION

An electronic device may be, for example, a mobile electronic device having at least one of software and firmware, such as, mobile cellular phone handsets, personal digital assistants (PDA's), pagers, MP3 players, digital cameras, etc.

Electronic devices, such as mobile phones and personal digital assistants (PDA's), and etc., may contain a finite amount memory for storing placed calls, received calls, a telephone number directory or contact list, for storing software/firmware usable to access services that an end-user may subscribe, and buffering information associated the services. The memory may comprise a non-volatile memory, such as for example, flash, non-volatile random access memory (NVRAM), secondary memory such as a hard-disk drive, floppy disk, CD-ROM, etc.

The services may include such features as wireless web browsing, wireless games, text message service, short message service, paging service, stock ticker service, sports ticker service, etc.

Using the services recited above may fill the memory with a plurality of information related to the associated services. Filling the memory may result in slowing the electronic device's ability to process calls, and may significantly reduce the electronic device's ability to perform and process the subscribed services. Additionally filling the electronic device's memory also reduces the capacity to the electronic device to store additional information as necessary.

Aspects of the present invention may be found in a method and system for erasing at least one memory configuration in an electronic device. Erasing the memory configuration of the electronic device may be initiated by an end-user, or alternatively, by a service provider communicating via a wireless or wireline communication network, as desired. Alternatively, the erasing of memory may be initiated by a timeout logic implemented in firmware, hardware, or software.

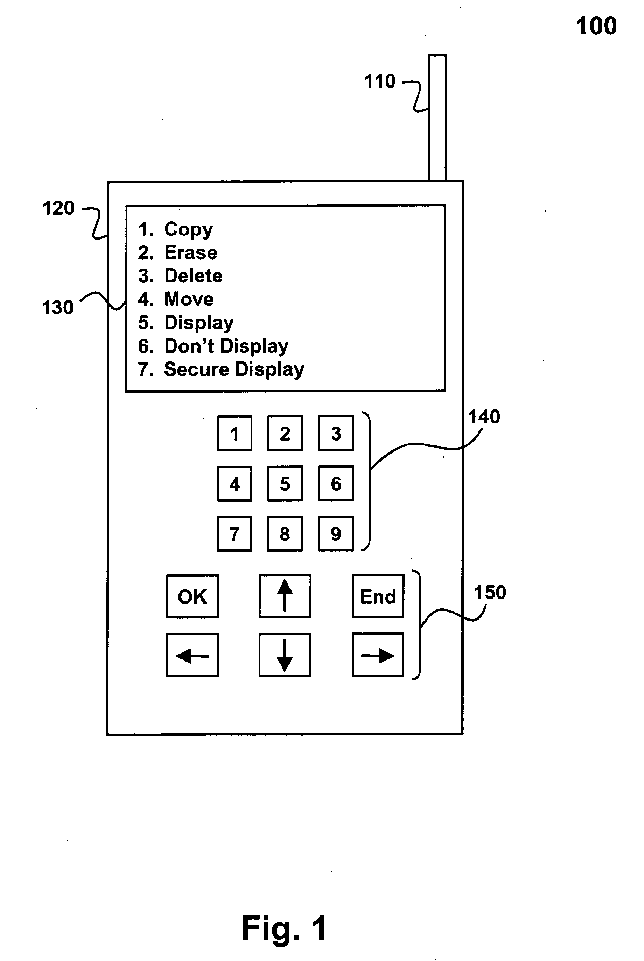

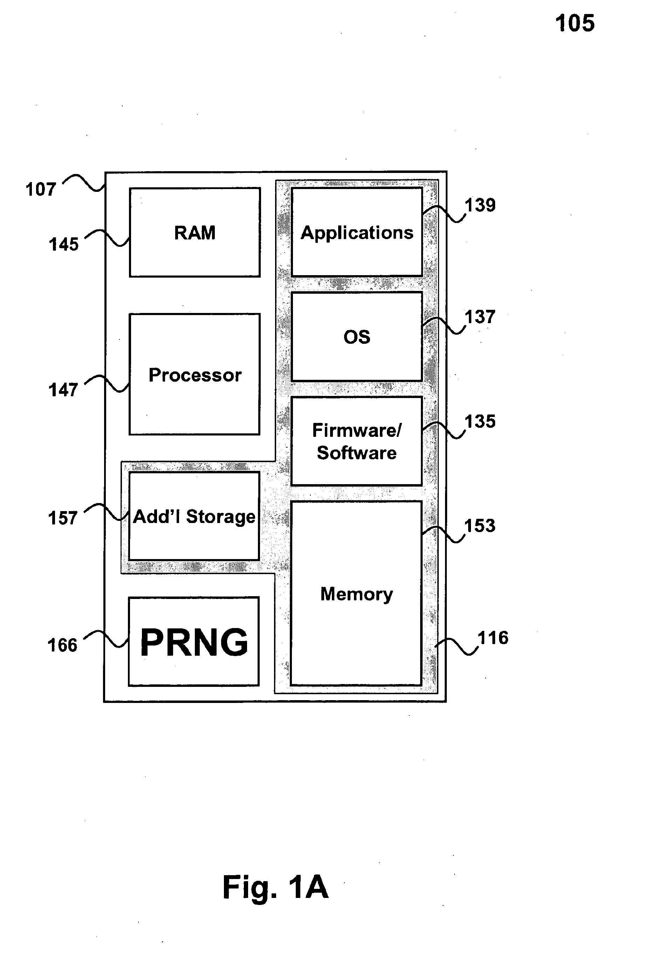

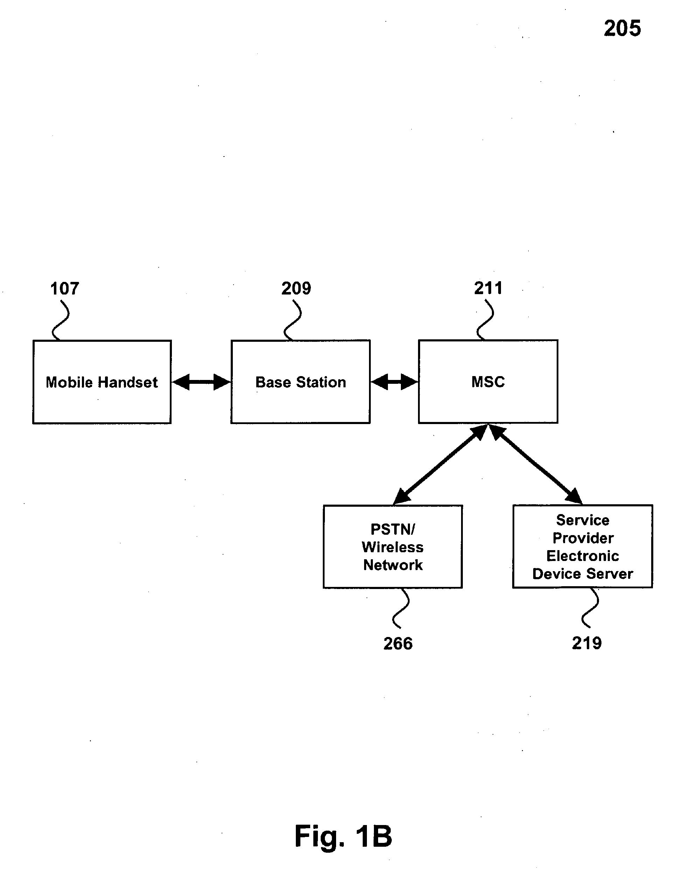

**Figure 1** is a perspective diagram illustrating an electronic device 100 in accordance with an embodiment of the present invention. In **Figure 1**, the electronic device 100 may comprise a mobile cellular telephone handset 120 (mobile handset 120), for purposes of explanation. However, numerous other electronic devices, including those recited above, may apply the method and engage the system set forth herein.

The electronic device 100 in **Figure 1,** for example, mobile handset 120, may comprise an antenna 110. The antenna 110 may be used to facilitate wireless communication between the mobile handset 120 and the wireless communications network. The electronic device 100 may also be connected to the communications network via a cable or wire, as desired.

The mobile handset 120 may also comprise a display or screen 130. The screen 130 may display call information, call directory or contact information, stock ticker, news ticker, sports ticker, games, wireless web browser, and a plurality of menus for accessing subscribed services and additionally for performing maintenance, programming, updating, data entry, and other services upon the mobile handset 120.

The mobile handset 120 may also comprise a plurality of alpha-numeric buttons 140 for entering data, making calls, and selecting services displayed in menus on display/screen 130. The mobile handset 120 may also comprise a plurality of control buttons 150.

The control buttons may be used to navigate through menus displayed on screen 130, select menus options, etc. The control buttons 150 may facilitate programming the mobile handset 120, updating firmware/software, performing maintenance, and performing memory manipulation, such as erasing a memory location or the entirety of the non-volatile memory.

Figure 1A is a block diagram 105 illustrating components of an electronic device (mobile handset 107) in accordance with an embodiment of the present invention. In **Figure 1A,** mobile handset 107 may comprise a plurality on non-volatile memory storage units.

In an embodiment according to the present invention, the mobile handset may comprise a single non-volatile memory storage unit 116 comprising a plurality of non-volatile memory sub-sections. Alternatively, the mobile handset 107 may comprise a plurality of individual non-volatile memory units.

In an embodiment according to the present invention, the non-volatile memory sub-sections may comprise at least the following non-volatile memory storage sub-sections: applications 139, operating system (OS) 137, firmware/software 135, general use memory 153, and additional storage memory unit 157.

The mobile handset 107 may also comprise random access memory (RAM) 145, a processor 147, and a pseudo-random number generator (PRNG) 166.

**Figure 1B** is a block diagram illustrating an electronic device network 205 in accordance with an embodiment of the present invention. The mobile handset 107 may be adapted to communicate via local wireless transmission and reception to/from a local base station 209. The base station 209 may comprise a transmission tower in the geographic region where the mobile handset 107 may currently be located.

A plurality of base stations and a plurality of mobile subscribers may be communicatively connected to a mobile service switching center (MSC) 211. The MSC 211 may provide communicative connection to the public switched telephone network (PSTN) and/or other wireless networks 266, as desired, or necessitated, by the communications initiated at the mobile handsets.

The MSC 211 may also provide communicative connection to a service provider's electronic device server (SPEDS) 219. The SPEDS 219 may be adapted to communicate updates, additional services, maintenance commands, etc. to the mobile handset 107 via the MSC 211 and the base station 209.

In an embodiment according to the present invention, the SPEDS 219 may send an erase command to the mobile handset 107, wherein the mobile handset 107 may be adapted, based upon the erase command's instructions, erase at least one sub-section (portion) of the non-volatile memory 116 in the mobile handset 107.

In another embodiment according to the present invention, the erase command may also be initiated by an end-user, wherein at least one sub-section (portion) of non-volatile memory may be erased. Methods of securely erasing a non-volatile memory section/sub-section/portion according an embodiment of the present invention are disclosed below.

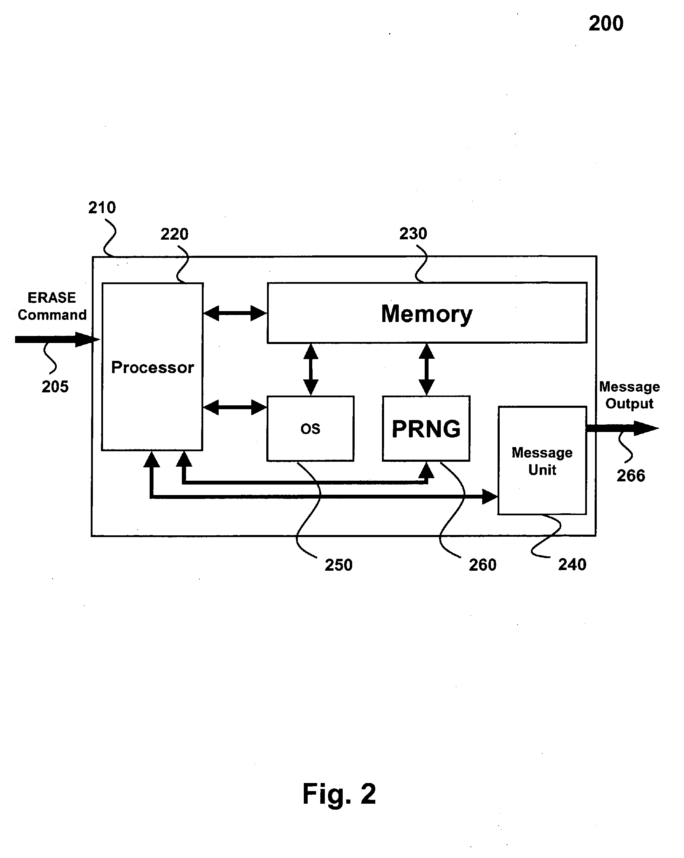

**Figure 2** is a block diagram 200 illustrating an electronic device controller 210 in accordance with an embodiment of the present invention. In **Figure 2**, an erase command 205 may be received at the electronic device controller 210. The electronic device controller 210 may be employed by electronic device 100, for example, mobile handset 107, as illustrated in **Figures 1, 1A** and **1B.**

The erase command 205 may be received via a wireless communication from the communications network, illustrated in **Figure 2**, or alternatively, the erase command 205 may be received by an end-user of the electronic device 100. The end-user may also be prompted to initiate the erase command 205 to provide erasure of data and information, which otherwise may linger in the electronic device 100, for example, mobile handset 107.

The erase command 205 may be received at processor 220, wherein the processor 220 may evaluate the erase command 205 and determine the sections/sub-sections/portion of non-volatile memory 230 to be erased.

In prior memory systems, an erase/delete command merely identified a particular section(s)/sub-section(s) of memory as being inactive, (i.e., capable of being overwritten), without actually erasing/overwriting the information/data contained in the particular memory section(s) and sub-section(s). Accordingly, the data and information remained/lingered in the device's non-volatile memory.

In an embodiment according to the present invention, the information/data contained in the entirety of the non-volatile memory 230, particular section(s), and/or particular sub-section(s) being commanded to be erased may be overwritten at least once.

In another embodiment according to the present invention, the information/data contained in the non-volatile memory 230 section(s)/sub-section(s) being commanded to be securely erased may be overwritten twice.

In an embodiment according to the present invention, overwriting information/data contained in the entirety/section(s)/sub-sections(s) of non-volatile memory 230 may comprise accessing a predetermined information storage unit (PISU) 250.

The PISU 250 may comprise a plurality of previously generated predetermined data/information. The predetermined information stored in the PISU 250 may be used to overwrite the entirety/section(s)/sub-section(s) of the non-volatile memory 230.

In another embodiment according to the present invention, randomly generated information/data may be used to overwrite the entirety/section(s)/sub-sections(s) of non-volatile memory 230. The electronic device controller 210 may comprise a pseudo-random number generator (PRNG) 260. The PRNG 260 may be adapted to produce randomly generated numbers that may be used to overwrite the entirety/section(s)/sub-sections(s) of non-volatile memory 230 in the electronic device.

In an embodiment according to the present invention, the PISU 250, as illustrated in **Figure 2**, may be populated in advance by the PRNG 260 creating a plurality of previously randomly generated data/information for use in overwriting memory locations in non-volatile memory 230 during an erase process.

In an embodiment according to the present invention, the electronic device controller 210 may also comprise a message storage unit 240. The message storage unit 240 may comprise a plurality of messages for display to the end-user and/or transmission to the service provider electronic device server 219.

Upon successful completion of an erase process, the electronic device controller 210 or processor 220 may transmits an output message 266 indicating the successful completion of the erase process and details of the erase process to the end-user and/or the service provider electronic device server 219, for example.

In the event that the erase process is unsuccessful, an output message 266 indicating failure of the erase process may be transmitted by the processor 220 to the end-user and/or the service provider electronic device server 219 indicating the failure of the erase process, details of the erase process failure, and a prompt for the end-user to re-initiate the erase process, for example.

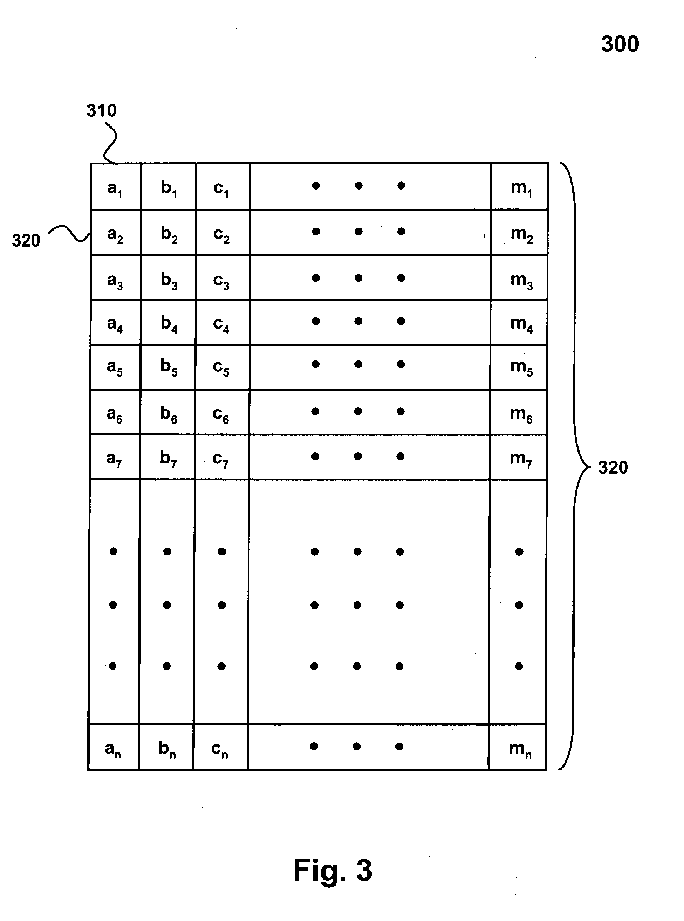

**Figure 3** is a block diagram 300 illustrating a memory configuration 325 in an electronic device 120 in accordance with an embodiment of the present invention. In **Figure 3**, the memory configuration 325 is illustrated, for purposes of example, as being provided with a plurality of memory locations arranged in a plurality of memory columns 310 and a plurality of memory rows 320.

The memory rows and memory columns may be implemented in various ways in actual implementation. For example, in case of secondary storage devices, such as, hard-disk drives and floppy disks, the memory rows and columns may be understood as sectors and tracks.

Each memory location may initially contain some data/information. The data/information contained in each memory location may be provided with an identifying variable for purposes of example.

For example, as illustrated in **Figure 3**, the data/information contained in column 310 may be defined for purposes of example as follows: a₁, a₂, a₃, a₄, a₅, a₆, a₇, ..., an. Similarly, as also illustrated in **Figure 3,** the data/information contained in row 320 may be defined for purposes of example as follows: a₂, b₂, c₂, ... , m₂.

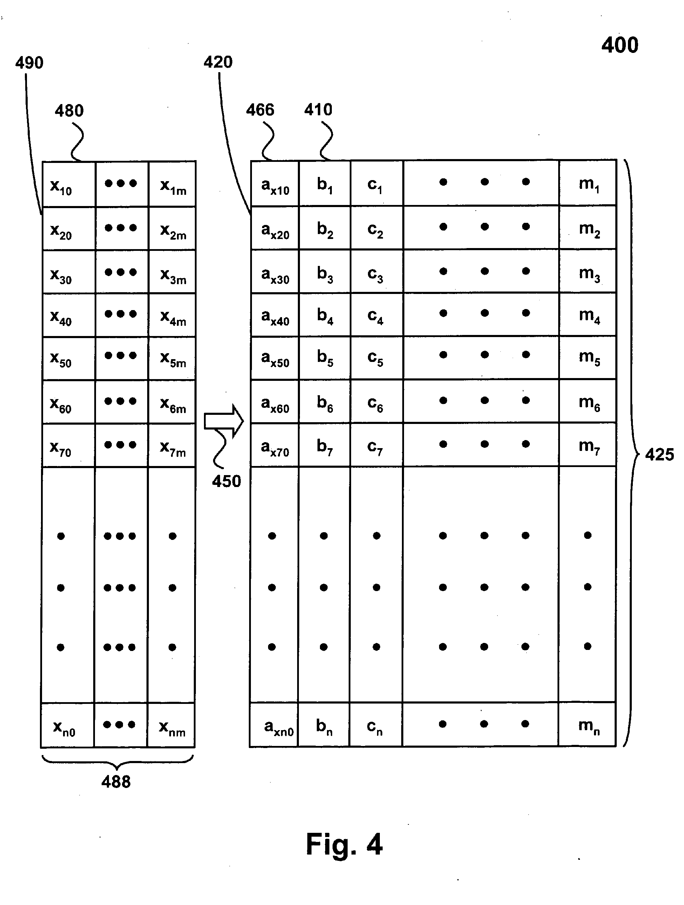

**Figure 4** is a block diagram 400 illustrating a memory configuration 425 and an additional storage unit 488 in an electronic device 120 in accordance with an embodiment of the present invention. In **Figure 4**, the memory configuration 425 is illustrated, for purposes of example, as being provided with a plurality of memory locations arranged in a plurality of memory columns 410 and a plurality of memory rows 420.

Each memory location may contain some data or information. The data/information contained in each memory location may be provided with an identifying variable for purposes of example.

For example, as illustrated in **Figure 4**, the data/information contained in column 410 may be defined for purposes of example as follows: b₁, b₂, b₃, b₄, b₅, b₆, b₇, ..., bₙ. Similarly, as also illustrated in **Figure 3,** the data/information may be arranged in a plurality of rows, such as for example row 420.

Also illustrated in **Figure 4,** for purposes of example, is a predetermined information storage unit (PISU) 488. The PISU 488 for purposes of example, is illustrated as also being provided with a plurality of memory locations arranged in a plurality of memory columns 480 and a plurality of memory rows 490.

Each memory location in the PISU 488 may contain some predetermined data/information. The predetermined data/information contained in each memory location of the PISU 488 may also be provided with an identifying variable for purposes of example.

For example, as illustrated in **Figure 4,** the data/information contained in column 480 of PISU 488 may be defined for purposes of example as follows: x₁₀, x₂₀, x₃₀, X₄₀, x₅₀, X₆₀, X₇₀, ... , xₙ₀. Similarly, the data/information contained in row 490 may be defined for purposes of example as follows: x₂₀, x₂₁, x₂₂, ... , x₂ₘ.

In **Figure 4,** for example, an erase command 205 may have already been received and evaluated by processor 220. Accordingly, the information in column 466 may have been determined to be chosen for erasure and commanded to undergo an erase process according to an embodiment of the present invention.

In an embodiment according to the present invention, the contents of column 480 of the PISU 488 may be overwritten into each of the memory locations of column 466. The resulting column may comprise the following overwritten predetermined data/information being stored in each memory location: Oₓ₁₀, Oₓ₂₀, Oₓ₃₀, Oₓ₄₀, Oₓ₅₀ Oₓ₆₀, Oₓ₇₀, ... , Oₓₙ₀, wherein O indicates that the information/data currently stored in each memory location of column 466 in non-volatile memory (memory configuration 425) is overwritten with predetermined information/data.

Arrow 450 illustrates that the information/data stored in column 480 of PISU 488 is being written to each memory location in column 466 in non-volatile memory storage unit 425. After the erase process, according to the present invention, has successfully completed row 420, for example, may comprise the following exemplary defined values: O_{x2O}, b₂, c₂, ... , m₂, for example.

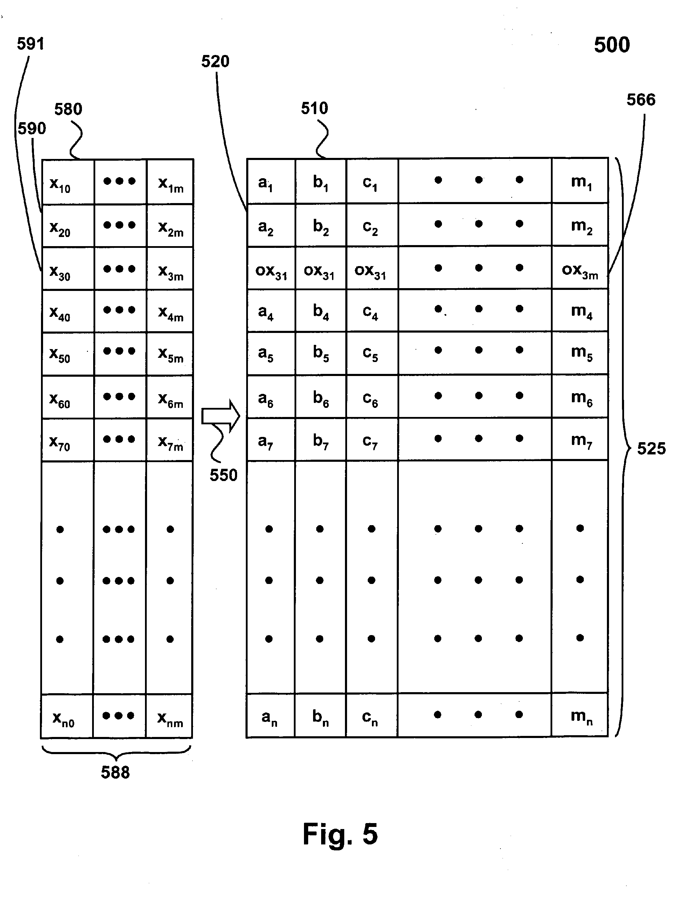

**Figure 5** is a block diagram 500 illustrating a memory configuration 525 and an additional storage unit (PISU) 588 in an electronic device 120 in accordance with an embodiment of the present invention. In **Figure 5,** the memory configuration 525 is illustrated, for purposes of example, as being provided with a plurality of memory locations arranged in a plurality of memory columns 510 and a plurality of memory rows 520.

The memory rows and memory columns can be implemented in various ways in actual implementation. For example, in case of secondary storage devices, such as, hard-disk drives and floppy disks, the memory rows and columns can be understood as sectors and tracks.

Each memory location may initially contain some data or information. The data/information contained in each memory location may be provided with an identifying variable for purposes of example.

As illustrated in **Figure 5**, for purposes of example, is a predetermined information storage unit (PISU) 588. The PISU 588, for purposes of example, is illustrated being provided with a plurality of memory locations arranged in a plurality of memory columns 580 and a plurality of memory rows 590.

The memory rows and memory columns can be implemented in various ways in actual implementation. For example, in case of secondary storage devices like hard-disk drives and floppy disks, the memory rows and columns can be understood as sectors and tracks.

Each memory location may contain some predetermined data or predetermined information. The predetermined data/information contained in each memory location of PISU 588 may also be provided with an identifying variable for purposes of example.

For example, as illustrated in **Figure 5,** the data/information contained in column 580 of PISU 588 may be defined for purposes of example as follows: x₁₀, x₂₀, x₃₀, x₄₀, x₅₀, x₆₀, x₇₀, ... , xₙ₀. Similarly, the data/information contained in row 590 may be defined for purposes of example as follows: x₂₀, ... , x₂ₘ.

In **Figure 5,** for example, an erase command 205 may have already been received and evaluated by processor 220. Accordingly, the information in row 566 may have been determined to be chosen for erasure and commanded to undergo an erase process according to an embodiment of the present invention.

In an embodiment according to the present invention, the contents of row 591 of the PISU 588 may be overwritten into each of the memory locations of row 566. The resulting row 566 may comprise the following overwritten predetermined data/information being stored in each memory location: Oₓ₃₀, Oₓ₃₁, Oₓ₃₂, ... , Oₓ₃ₙ, wherein O indicates that the information/data currently stored in each memory location of row 566 in non-volatile memory (memory configuration 525) is overwritten with predetermined information/data.

For example, as illustrated in **Figure 5**, the data/information contained in column 510 after completion of the erase process may be defined for purposes of example as follows: b₁, b₂, O_{X32}, b₄, b₅, b₆, b₇, ... , bn.

Arrow 550 illustrates that the information/data stored in row 591 of PISU 588 is being written to each memory location in row 566 in non-volatile memory (memory configuration 525).

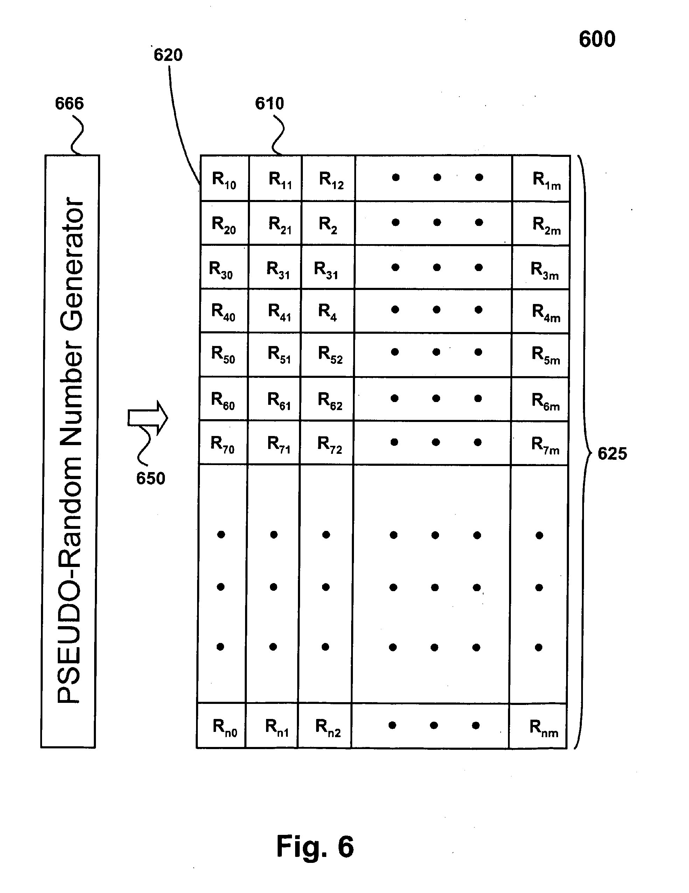

**Figure 6** is a block diagram 600 illustrating a memory configuration 625 and a pseudo-random number generator (PRNG) 666 in an electronic device 120 in accordance with an embodiment of the present invention. In **Figure 6,** the memory configuration 625 is illustrated, for purposes of example, as being provided with a plurality of memory locations arranged in a plurality of memory columns 610 and a plurality of memory rows 620. The memory rows and memory columns can be implemented in various ways in actual implementation. For example, in case of secondary storage devices like hard-disk and floppy disks, these memory rows and columns can be understood as sectors and tracks.

Each memory location may initially contain some data or information. The data/information contained in each memory location may be provided with an identifying variable for purposes of example.

Also illustrated in **Figure 6,** for purposes of example, is pseudo-random number generator (PRNG) 666. The PRNG 666 may be adapted to randomly generate a plurality of numbers/data/information. The PRNG 666 may be adapted to produce as many randomly generated numbers as the erase process may require. The PRNG 666 may also comprise a linear feedback shift register (LFSR) generating an orthogonal sequence of numbers based upon a polynomial.

In an embodiment according to the present invention, the PISU 250, as illustrated in **Figure 2**, may be populated with randomly generated data/information in advance by the PRNG 666 creating a plurality of previously generated random values for use in overwriting memory locations in non-volatile memory storage unit (memory configuration 625) during an erase process. The previously generated random values may be evaluated by the processor 220, wherein they may later, after evaluation, be called predetermined data/information because the processor is aware of the values/data/information.

For example, as illustrated in **Figure 6**, the randomly generated data/information produced by PRNG 666, or alternatively, previously stored in PISU 250 may be used to overwrite information stored in the memory configuration 625 during an erase process.

In **Figure 6,** for example, an erase command 205 may have already been received and evaluated by processor 220. Accordingly, in an embodiment of the present invention, the entirety of the memory configuration 625 may have been determined to have been chosen for erasure and commanded to undergo an erase process according to an embodiment of the present invention.

In an embodiment according to the present invention, the entire contents of memory configuration 625 have been overwritten with randomly generated data/information produced by PRNG 666. A resulting column 610 in memory configuration 625 may comprise the following overwritten randomly generated data/information stored in each memory location: R₁₁, R₂₁, R₃₁, R₄₁, R₅₁, R₆₁, R₇₁, ... Rₙ₁, wherein R indicates that the information/data currently stored in each memory location of column 610 in non-volatile memory (memory configuration 625) is overwritten with randomly generated information/data.

For example, as illustrated in **Figure 6**, the data/information contained in row 620 after completion of the erase process using the randomly generated data/information may be comprise for purposes of example: R_{10,} R₁₁, R₁₂, ... , R₁ₘ.

Arrow 650 illustrates that the information/data stored in the memory configuration 625 originated from PRNG 666 and is written to each memory location in non-volatile memory (memory configuration 625).

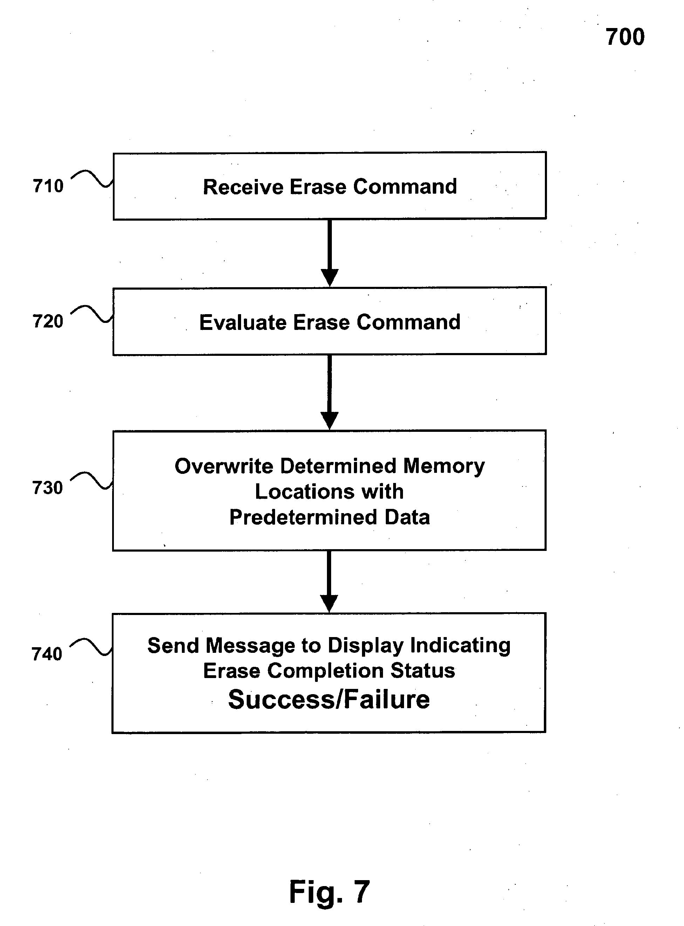

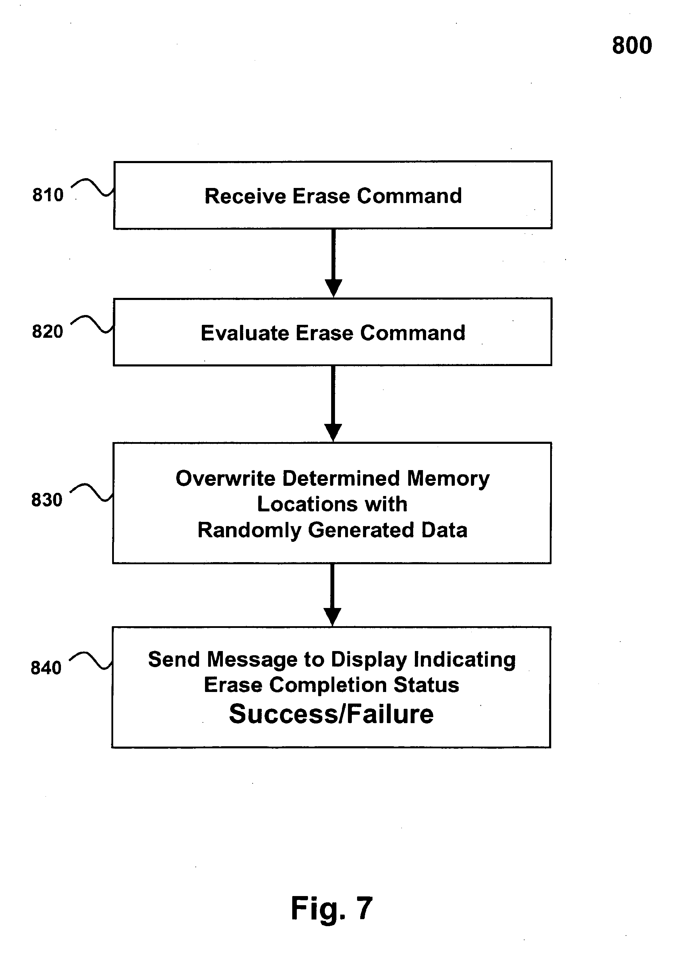

**Figure 7** is a flow chart 700 illustrating a method of erasing at least one portion of non-volatile memory (memory configuration) in an electronic device in accordance with an embodiment of the present invention. In **Figure 7,** the electronic device 100 may receive an erase command 710.

The erase command may be received from a service provider electronic device server (SPEDS), or alternatively may be received from an end-user of the electronic device 100. In another embodiment according to the present invention, in response to receiving the erase command from the SPEDS, the end-user may be prompted to initiate the erase process.

The processor 220 in the mobile handset 107 may be adapted to evaluate the erase command 720. Evaluation of the erase command permits the processor to determine what portion(s) of the non-volatile memory is being commanded to be erased. For example, the entirety/section(s)/sub-section(s) may be determined to be erased by evaluation of the erase command.

The processor may perform the erase process by overwriting the chosen non-volatile memory locations with predetermined data/information 730. The predetermined data/information may be provided from the predetermined information storage unit, such as for example, PISU 250, as illustrated in **Figure 2.**

Upon successful completion of the erase process, a message may be sent to an end-user or to the service provider electronic device server (SPEDS) 740. The message may comprise details related to the erase process, such as what portions of the non-volatile memory have been erased.

Alternatively, if the erase process fails, a failure message may be sent to the end-user or SPEDS indicating that the erase process has failed. The message may also comprise details of the failure and a prompt to restart the erase process.

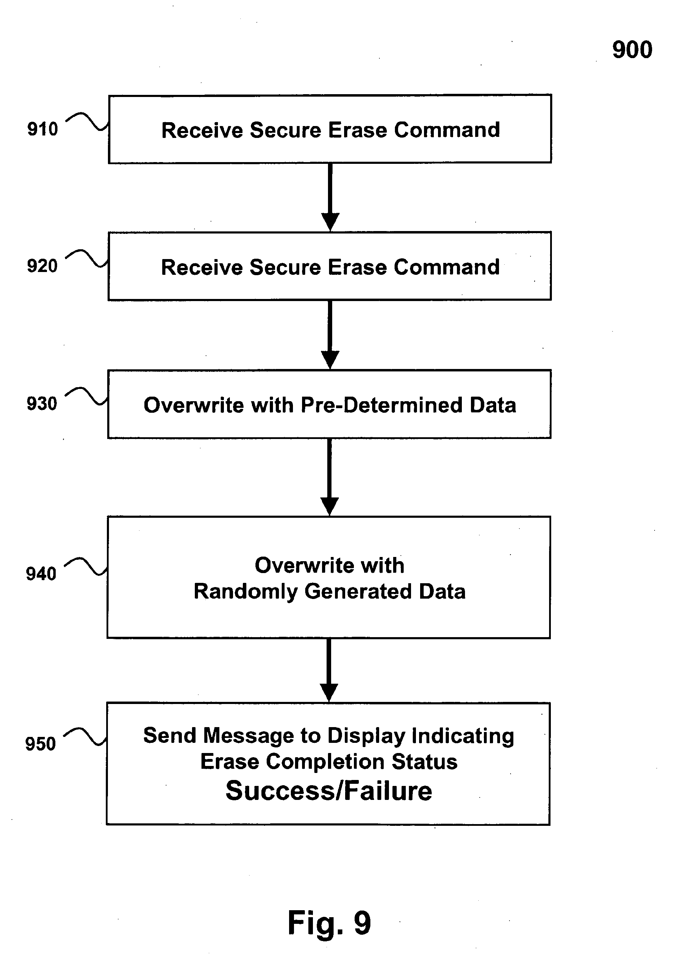

**Figure 8** is a flow chart 800 illustrating a method of erasing at least a portion of a memory configuration in an electronic device in accordance with an embodiment of the present invention. In **Figure 8**, the electronic device 100 may receive an erase command 810.

The erase command may be received from SPEDS, or alternatively, may be received from an end-user of the electronic device 100. In another embodiment according to the present invention, in response to receiving the erase command from the SPEDS, the end-user may be prompted to initiate the erase procedure.

The processor in the mobile handset may be adapted to evaluate the erase command 820. Evaluation of the erase command permits the processor to determine what portion of the non-volatile memory is to be erased. For example, the entirety/section(s)/sub-section(s) may be determined to be erased by evaluating the erase command.

The processor may perform the erase process by overwriting the chosen non-volatile memory locations with randomly generated data/information 830. The randomly generated data/information may be provided from PRNG 666 for example, or alternatively, from PISU 250, as illustrated in Figure 2.

Upon successful completion of the erase process, a message may be sent to an end-user or to SPEDS 840. The message may comprise details related to the erase process, such as what portions of the non-volatile memory have been erased.

Alternatively, if the erase process fails, a failure message may be sent to the end-user or SPEDS indicating that the erase process has failed. The message may also comprise details of the failure and a prompt to restart the erase process.

**Figure 9** is a flow chart 900 illustrating a method of securely erasing at least a portion of a memory configuration in an electronic device 100 in accordance with an embodiment of the present invention. In **Figure 9,** the electronic device 100 may receive a secure erase command 910.

The secure erase command may be received from (SPEDS), or alternatively, may be received from an end-user of the electronic device 100. In an embodiment according to the present invention, in response to receiving the secure erase command from the SPEDS, the end-user may be prompted to initiate the secure erase process.

The processor in the mobile handset 120 may be adapted to evaluate the secure erase command 920. Evaluation of the secure erase command permits the processor to determine what portion of the non-volatile memory is to be securely erased. For example, the entirety/section(s)/sub-section(s) may be determined to be erased from the erase command.

In an embodiment according to the present invention, the secure erase command may comprise performing at least two or a plurality of erase/overwrite processes to the portion(s) of the non-volatile memory chosen to be securely erased. For example, secure erasure may comprise: a) the portion of the non-volatile memory chosen to be erased being overwritten twice with predetermined information/data; b) the portion of the non-volatile memory chosen to be erased being overwritten twice with randomly generated information/data; c) the portion of the non-volatile memory chosen to be erased being overwritten once with predetermined information/data and then overwritten a second time with randomly generated information/data; d) the portion of the non-volatile memory chosen to be erased being overwritten first with randomly generated information/data and then being overwritten with predetermined information/data according to an embodiment of the present invention.

**Figure 9** illustrates a method according to embodiment c) above, wherein the portion of the non-volatile memory chosen to be erased may initially be overwritten once with predetermined information/data 930 and then overwritten again with randomly generated information/data 940. The non-volatile memory being overwritten twice may ensure that the erased data/information is unrecoverable, i.e., securely erased.

Upon successful completion of the secure erase process, a message may be sent to an end-user or to the SPEDS, for example 950. The message may also comprise details related to the secure erase process, such as what portions of the non-volatile memory have been securely erased.

Alternatively, if the secure erase process fails, a failure message may be sent to the end-user or SPEDS indicating that the secure erase process has failed. The message may also comprise details of the failure and a prompt to restart the secure erase process.

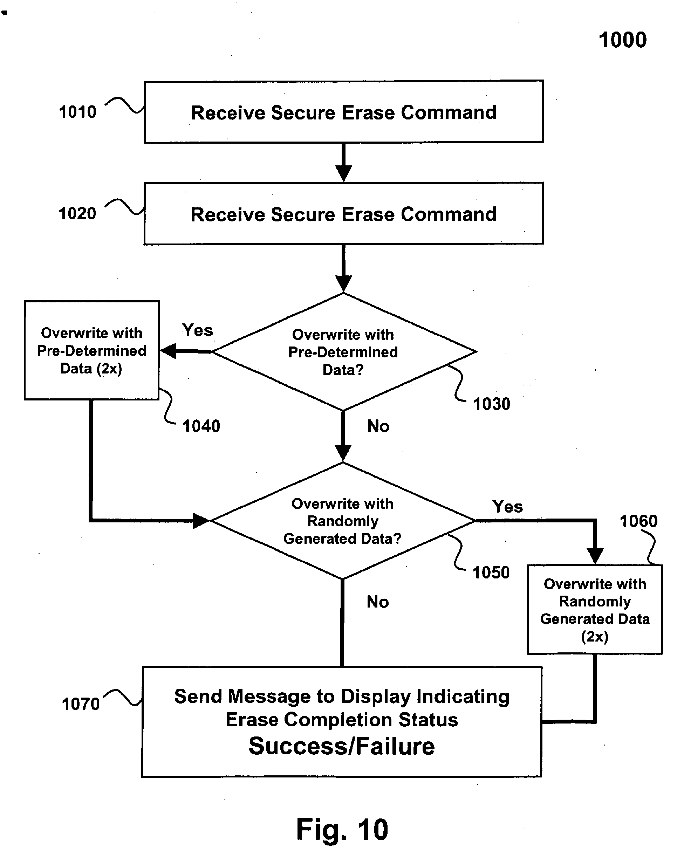

**Figure 10** is a flow chart 1000 illustrating another method of securely erasing at least one portion of a memory configuration in an electronic device 100 in accordance with an embodiment of the present invention. In **Figure 10,** the electronic device 100 may receive a secure erase command 1010. The secure erase command may be received from (SPEDS), or alternatively, may be received from an end-user of the electronic device 100. In an embodiment according to the present invention, in response to receiving the secure erase command from the SPEDS, the end-user may be prompted to initiate the secure erase procedure.

The processor in the electronic device 100 may be adapted to evaluate the secure erase command 1020. Evaluation of the secure erase command permits the processor to determine what portion of the non-volatile memory is to be securely erased. For example, the entirety/section(s)/sub-section(s) may be determined to be securely erased from the secure erase command.

In an embodiment according to the present invention, the secure erase command may comprise performing at least two or a plurality of erase/overwrite processes to the portion(s) of the non-volatile memory chosen to be securely erased. The secure erase process may further comprise an end-user choice as to how the secure erase process is to be carried out.

For example, the end-user may be prompted to determine whether the processor may perform the secure erase process by overwriting the chosen memory locations in non-volatile memory with predetermined data/information 1030. If the end-user selects the affirmative response, the processor may immediately initiate overwriting the memory locations with predetermined data/information from the PISU 250, for example. Overwriting using predetermined information may be performed one of a plurality of times, two consecutive times 1040, if selected, or a single time, as desired.

However, if the end-user selects a negative response, the processor may prompt the end-user to select using randomly generated data/information 1050. If the end-user selects the use of randomly generated data/information to perform the secure erase process, then the processor may immediately initiate overwriting the chosen memory location in non-volatile memory with randomly generated information/data. Overwriting using randomly generated information may be performed one of a plurality of times, two consecutive times 1060, if selected, or a single time, as desired.

As set forth above, secure erasure may comprise: a) the portion of the non-volatile memory chosen to be securely erased being overwritten twice with predetermined information/data; b) the portion of the non-volatile memory chosen to be securely erased being overwritten twice with randomly generated information/data; c) the portion of the non-volatile memory chosen to be securely erased being overwritten once with predetermined information/data and then overwritten a second time with randomly generated information/data; d) the portion of the non-volatile memory chosen to be securely erased being overwritten first with randomly generated information/data and then being overwritten with predetermined information/data according to an embodiment of the present invention.

Upon successful completion of the secure erase process, a message may be sent to an end-user or to the SPEDS, for example 1070. The message may also comprise details related to the erase process, such as what portions of the non-volatile memory have been securely erased.

Alternatively, if the secure erase process fails, a failure message may be sent to the end-user or SPEDS indicating that the secure erase process has failed. The message may also comprise details of the failure and a prompt to restart the secure erase process.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method of erasing at least one portion of non-volatile memory in an electronic device, the method comprising:
receiving an erase command;
evaluating the erase command to determine the at least one portion of the non-volatile memory to be erased; and
performing an erase process upon the at least one portion of non-volatile memory, wherein performing the erase process comprises overwriting memory locations of the at least one portion of non-volatile memory with predetermined data.

2. The method according to claim 1, further comprising:
generating the predetermined data prior to performing the erase process;
storing the predetermined data in a non-volatile storage unit; and
retrieving the predetermined data from the non-volatile storage unit.

3. The method according to claim 1, further comprising overwriting memory locations of the at least one portion of non-volatile memory with predetermined data one of a plurality of times and at least once.

4. The method according to claim 1, wherein performing the erase process comprises overwriting memory locations of the at least one portion of non-volatile memory with randomly generated data.

5. The method according to claim 4, further comprising:
generating the randomly generated data prior to performing the erase process;
storing the randomly generated data in a non-volatile storage unit; and
retrieving the randomly generated data from the non-volatile storage unit.

6. An electronic device having non-volatile memory, the electronic device being adapted to erase at least one portion of non-volatile memory, the electronic device comprising:
a processor adapted to manage an erase process;
a non-volatile storage unit containing one of predetermined data and randomly generated data;
random access memory facilitating temporary storage of erase process parameters during the erase process; and
a pseudo-random number generator (PRNG) for randomly generating data usable during the erase process, wherein upon receiving an erase command, the electronic device is adapted to erase the at least one portion of non-volatile memory.

7. The electronic device according to claim 6, wherein the processor is adapted to evaluate the erase command to determine the at least one portion of the non-volatile memory to be erased.

8. The electronic device according to claim 6, wherein the processor is adapted to overwrite memory locations of the at least one portion of non-volatile memory with predetermined data during an erase process.

9. The electronic device according to claim 8, wherein the PRNG is adapted to generate the predetermined data prior to the processor performing the erase process.

10. The electronic device according to claim 6, wherein the predetermined data is stored in the non-volatile storage unit.
